# EUROPÄISCHE PATENTSCHRIFT

(11) **EP 3 651 925 B1**
(45) Veröffentlichungstag und Bekanntmachung des Hinweises auf die Patenterteilung: **14.09.2022**
(21) Anmeldenummer: 18750102.8
(22) Anmeldetag: 09.07.2018
(51) Int. Cl.: F16H 55/08, F16H 55/17, B23F 15/00, B23F 21/00, B23F 5/16, B23F 17/00

(54) **VERFAHREN ZUM ERZEUGEN EINES VERZAHNTEN WERKSTÜCKS, SOWIE DAZU GEEIGNETE STEUERPROGRAMM, WEKZEUGE UND VERZAHNUNGSMASCHINE**
METHOD FOR GENERATING A TOOTHED WORKPIECE AND CONTROL PROGRAM, TOOLS AND TOOTH-CUTTING MACHINE SUITABLE THEREFOR
PROCÉDÉ POUR PRODUIRE UNE PIÈCE DENTÉE, AINSI QUE PROGRAMME DE COMMANDE, OUTILS ET MACHINE À FORMER LES DENTURES ADAPTÉS AUDIT PROCÉDÉ

(30) Priorität: 13.07.2017 DE 102017006651
(43) Veröffentlichungstag der Anmeldung: 20.05.2020
(73) Patentinhaber: Gleason-Pfauter Maschinenfabrik GmbH, 71636 Ludwigsburg (DE)
(72) Erfinder: WEPPELMANN, Edgar, 71679 Asperg (DE)
(74) Vertreter: Leinweber & Zimmermann
(86) Internationale Anmeldenummer: PCT/EP2018/068566
(87) Internationale Veröffentlichungsnummer: WO 2019/011871

(56) Entgegenhaltungen:
- EP-A2- 2 823 924
- DE-A1-102014 008 475
- DE-A1-102015 104 500
- DE-A1-102015 120 556
- DE-U1-202005 014 619
- JP-A- S59 182 021
- US-A- 1 998 835
- US-A- 2 298 471
- US-A- 3 931 754
- US-A- 5 765 974
- US-A1- 2002 197 121
- US-B2- 9 327 358

## Beschreibung

Die Erfindung betrifft ein Verfahren zum Erzeugen eines Werkstücks gemäß dem Oberbegriff des Anspruchs 1 mit einer in eine eine vorgegebene Verzahnungsgeometrie aufweisende erste Verzahnung eingearbeiteten zweiten Verzahnung, sowie eine dazu gesteuerte Verzahnungsmaschine gemäß dem Oberbegriff des Anspruchs 17. Die Erfindung betrifft ferner ein Tandem-Werkzeug und ein Triple-Werkzeug zur Ausführung des Verfahrens, sowie ein Steuerprogramm für eine Verzahnungsmaschine, welches die Verzahnungsmaschine zur Ausführung des Verfahrens steuert.

Ein derartiges Verfahren ist aus dem Dokument US 5 765 974 A bekannt und eine derartige Verzahnungsmaschine ist aus dem Dokument DE 10 2015 104500 A1 bekannt.

Derartige Verfahren sind in der Technik gut bekannt. So kann eine erste Verzahnung an einem Werkstück beispielsweise wälzend durch Wälzfräsen oder Wälzschälen erzeugt werden. Für vielfältige Anwendungsgebiete beispielsweise in der Herstellung von Getrieben ist es zusätzlich gewünscht, dass in eine solche erste Verzahnung eine zweite Verzahnung eingearbeitet ist. Beispielsweise könnte sich die zweite Verzahnung in einem sich über eine axiale Ausdehnung erstreckenden Bereich der ersten Verzahnung von dieser durch z.B. eine geringere Zahndicke oder konisch veränderte Flankenlinien unterscheiden. Die Einarbeitung der zweiten Verzahnung erfolgt dabei üblicherweise auf einer weiteren Bearbeitungsmaschine z.B. mit Schneidmessern aufweisenden Werkzeugen.

Der Erfindung liegt die Aufgabe zugrunde, ein Verfahren der eingangs genannten Art im Hinblick auf eine gute erreichte Verzahnungsqualität zu verbessern, und es insbesondere in einer einfachen und zeitsparenden Weise auszuführen.

Diese Aufgabe wird von der Erfindung in verfahrenstechnischer Hinsicht dahingehend durch ein Verfahren gemäß Anspruch 1 gelöst, dass ein die zweite Verzahnung in der Kinematik des Wälzschälens schneidend erzeugender erster Bearbeitungseingriff an dem Werkstück vorgenommen wird, welches insbesondere noch ein Aufmaß gegenüber der vorgegebenen Verzahnungsgeometrie aufweist, insbesondere an einem Übergang von der ersten zur zweiten Verzahnung, und danach ein zu der vorgegebenen Verzahnungsgeometrie passender zweiter Bearbeitungseingriff in der Kinematik des Wälzschälens an dem Übergang ausgeführt wird und dabei insbesondere ein verbleibendes Aufmaß abgetragen wird.

Dabei beruht die Erfindung zunächst auf der Erkenntnis, dass bei der Einarbeitung der zweiten Verzahnung in die erste Verzahnung des Werkstücks bei dem Einbringen durch Wälzschälen die Gefahr besteht, dass am Übergang ein Grat entsteht. Wird beispielsweise eine Steckverzahnung in eine Laufverzahnung durch Wälzschälen (Power Skiving) eingebracht, so kommt es insbesondere im Falle eingestellter kleiner Achskreuzwinkel und/oder kleiner Werkzeugdurchmesser zu einer Gratbildung beim Übergang am Auslauf der zweiten Verzahnung. Denn dabei kann es zu einem flachen Spanverlauf mit stark negativen effektiven Spanwinkeln während der Spanbildung kommen. Ebenfalls besteht die erhöhte Gefahr einer Gratbildung, wenn große maximale Nennspandicken erzeugt werden, der zu bearbeitende Werkstoff des Werkstücks verstärkt zur Gratbildung neigt oder wenn die Schneidkanten des für die Erzeugung der zweiten Verzahnung herangezogenen Werkzeuges etwa durch Verschleißbildung nicht mehr mit der vorgesehenen Schneidqualität schneiden.

Im Gegensatz zu herkömmlichen Mitteln zur Entfernung derartiger aus groben und/oder feinen Graten bestehenden Graten zur Vermeidung einer Verschmutzung oder Beschädigung eines Getriebes bei der späteren Anwendung des Werkstückes wie beispielsweise durch Bürsten oder Heranziehen z.B. einer Entgratscheibe, ist erfindungsgemäß vorgesehen, dass an dem Übergang ein zu der vorgegebenen Verzahnungsgeometrie passender Bearbeitungseingriff in der Kinematik des Wälzschälens ausgeführt wird. Der Ausdruck "passend" bedeutet, dass es sich um einen Bearbeitungsprozess des Wälzschälens handelt, mit dem die erste Verzahnung mit ihrer vorgegebenen Verzahnungsgeometrie generierbar ist. Durch diesen zweiten Bearbeitungseingriff an dem Übergang werden, sofern Grate beim ersten Bearbeitungseingriff entstanden sind, diese in einer die erste Verzahnung nicht beschädigenden Weise entfernt, so dass eine gute Verzahnungsqualität erreicht wird. Der zweite Bearbeitungseingriff, wenn spanabtragend ausgeführt, findet dazu auf einer Zustellposition statt, die der Verzahnungstiefe der vorgegebenen Verzahnungsgeometrie entspricht.

Eine geeignete Verzahnungsqualität kann erreicht werden, wenn gemäß einer bevorzugten Ausführungsform der erste Bearbeitungseingriff ausgeführt wird, wenn (wenigstens) an dem Übergang noch ein Aufmaß gegenüber der vorgegebenen Verzahnungsgeometrie vorhanden ist, und bei dem zweiten Bearbeitungseingriff dieses Aufmaß spanend abgetragen wird. Dann wird auf Tiefe der gewünschten Verzahnungsgeometrie geschnitten, die nicht mit dem Niveau der Kante übereinstimmt, von welcher die Grate in ggf. nicht kontrollierter Weise abstehen. Die Bearbeitungsqualität entspricht dann auch an dem Übergang der einer z.B. im letzten Bearbeitungsschritt durch Schlichten herkömmlich erzeugten einfachen wälzgeschälten Verzahnung.

Eine (Vor)verzahnung der ersten Verzahnung existiert somit vor Ausführung des ersten Bearbeitungseingriffs, sie muss aber noch nicht völlig der vorgegebenen Verzahnungsgeometrie entsprechen (Aufmaß).

Die Erfindung ist anwendbar auf Gerad- wie Schrägverzahnungen als erste Verzahnung, und für Innenverzahnungen wie für Außenverzahnungen, wobei die Erfindung gerade für Innenverzahnungen aufgrund deren eingeschränkter Zugänglichkeit merkliche Fortschritte bietet. Des Weiteren eignet sich die Erfindung für zylindrische erste Verzahnungen, jedoch auch für konische Verzahnungen, sofern die Konizität noch derart ist, dass sie durch ein klassisches wälzendes Verfahren wie die einleitend genannten Verfahren, insbesondere das Wälzschälen, erzeugbar ist.

Der Unterschied der zweiten Verzahnung zur ersten Verzahnung kann sich wie oben erläutert in einer geringeren Zahndicke oder in einem unterschiedlichen Schrägungswinkel von deren Flankengeometrie gegenüber der ersten Verzahnung äußern. Es sind jedoch auch andere Arten des Unterschieds denkbar, es könnte sich etwa um ein modifiziertes Profil und/oder eine anderweitig modifizierte Flankenlinie handeln, was den Unterschied zwischen der ersten und der zweiten Verzahnung ausmacht, oder einer Kombination dieser Aspekte. Ein bevorzugtes Beispiel für die zweite Verzahnung ist das einer in die erste Verzahnung eingebrachten Hinterlegung.

Die zweite Verzahnung könnte die Bearbeitung des Zahnfußbereiches der ersten Verzahnung mitbeinhalten, je nach Anwendung mag es jedoch ausreichen, dass nur die Zahnflanken ohne deren Fußbereich durch Einarbeitung der zweiten Verzahnung geändert werden, etwa bei der Einarbeitung einer Hinterlegung.

Des Weiteren kann die zweite Verzahnung (nur) von einem Ende der ersten Verzahnung her oder von beiden Enden her eingebracht werden, die Schnittrichtung kann somit bezüglich der Spindelstirnseite gesehen von ihr weg oder zu ihr hin gerichtet sein. In einer besonders bevorzugten Ausgestaltung läuft der erste Bearbeitungseingriff in den Übergang mit einer zu dem Übergang hin gerichteten axialen Schnittrichtungskomponente aus, und der zweite Bearbeitungseingriff weist eine zu dieser Schnittrichtungskomponente gleichgerichtete axiale Schnittrichtungskomponente auf. Auf diese Weise wird vermieden, dass ein Grat nur in Richtung auf die zweite Verzahnung umgebogen wird. Die genaue axiale Position der zweiten Verzahnung in der ersten Verzahnung ist nicht entscheidend.

In der Gestaltung, bei der die erste Verzahnung beim ersten Bearbeitungseingriff noch nicht der vorgegebenen Verzahnungsgeometrie entspricht, sollte das Aufmaß ein spanbildendes Abtragen erlauben (schneiden und nicht drücken bzw. mehr schneiden als drücken). Es ist bevorzugt vorgesehen, dass das Aufmaß wenigstens 6 µm, bevorzugt wenigstens 20 µm, insbesondere wenigstens 40 µm und/oder höchstens 1,6 mm, bevorzugt wenigstens 1,0 mm, insbesondere wenigstens 0,4 mm beträgt. Auf diese Weise kann zum einen Bearbeitungszeit bei der Herstellung der Vorverzahnung der ersten Verzahnung gespart werden, da diese noch nicht die durch die vorgegebene Verzahnungsgeometrie vorgegebene Profilform aufweisen muss, wobei dennoch keine nachteilige Spanbildung bei der Einarbeitung der zweiten Verzahnung insbesondere an deren Auslauf entsteht, die sich insbesondere bei zu großem Aufmaß ergeben könnte, wenn Lücken der ersten Verzahnung in erheblicherem Ausmaß noch nicht ausgebildet wären. Hier ist mit dem Aufmaß das Aufmaß pro Flanke gemeint.

In diesem Zusammenhang kann vorgesehen sein, dass das Aufmaß nur über einen Abschnitt der Verzahnungsbreite der ersten Verzahnung besteht. In einer möglichen Ausführungsform ist jedoch vorgesehen, dass sich das Aufmaß über die volle Verzahnungsbreite der ersten Verzahnung erstreckt und im zweiten Bearbeitungseingriff abgetragen wird. Dies erleichtert die Herstellung der Vorverzahnung der ersten Verzahnung aufgrund deren gleichmäßigeren Form.

In einer alternativen Gestaltung könnte der zweite Bearbeitungseingriff in einem Leerhub lediglich entgratend wirken, indem auf eine etwas weniger tiefe Zustellung als auf eine, bei der die Verzahnungsgeometrie spanend erzeugbar wäre, zugestellt wird.

Der erste Bearbeitungseingriff und der zweite Bearbeitungseingriff könnten an zwei unterschiedlichen Werkzeugstationen ausgeführt werden, die z.B. jeweils einen Werkzeugkopf aufweisen. Bevorzugt ist jedoch vorgesehen, dass der erste wie auch der zweite Bearbeitungseingriff über dieselbe drehend angetriebene Werkzeugachse erfolgt. Dazu könnte auf einer zugehörigen Werkzeugspindel ein Werkzeugwechsel zwischen der ersten und zweiten Bearbeitung vorgenommen werden (und ggf. auch vor der ersten Bearbeitung, wenn das Schälrad für den zweiten Bearbeitungseingriff auch vor dem ersten eingesetzt wird). Diese Variante eignet sich bevorzugt bei rasch bewerkstelligtem Werkzeugwechseln. In einer weiter zeitsparenden Ausgestaltung ist dagegen kein Werkzeugwechsel erforderlich, sondern die erforderlichen Werkzeuge sind bereits beide in einer Aufspannung aufgespannt.

In diesem Zusammenhang ist in einer bevorzugten Ausgestaltung vorgesehen, dass ein werkzeugseitiger Eingriffsbereich des ersten Bearbeitungseingriffs sich von dem werkzeugseitigen Eingriffsbereich des zweiten Bearbeitungseingriffs unterscheidet. Dies erlaubt variablere Gestaltungen der zweiten Verzahnung gegenüber der ersten Verzahnung hinsichtlich einer Erzeugbarkeit nicht nur durch unterschiedliche Maschinenachssteuerungen, sondern auch aufgrund unterschiedlicher Werkzeuggeometrien.

Dennoch kann, wie in einer bevorzugten Ausführungsform vorgesehen ist, mit der gleichen drehend angetriebenen Werkzeugachse und ohne Werkzeugwechsel gearbeitet werden, nämlich wenn die beiden Eingriffsbereiche Abschnitte eines Kombi-Werkzeugs sind, insbesondere durch jeweils ein eigenständiges Werkzeug eines Tandem-Werkzeugs gebildet sind. Bevorzugt kommt somit ein Werkzeug mit zwei voneinander axial beabstandeten Schälrädern zum Einsatz, wobei das Schälrad für den ersten Bearbeitungseingriff bevorzugt einen geringeren Durchmesser hat als das für den zweiten Bearbeitungseingriff und gegenüber diesem aufspannungsferner angeordnet ist.

Je nach Art der zweiten Verzahnung sind Varianten denkbar, bei denen der erste Bearbeitungseingriff im Zweiflankenverfahren erfolgt. In einer besonders bevorzugten Ausgestaltung erfolgt der erste Bearbeitungseingriff jedoch im Einflankenverfahren. Dies ermöglicht eine erhöhte Variabilität, insbesondere kann die zweite Verzahnung dann auf der rechten und linken Flanke des Werkstücks unterschiedlich ausgestaltet werden. Beispielsweise könnte der Auslaufbereich in die erste Verzahnung auf beiden Flanken auf gleichen oder unterschiedlichen Abständen von einer der beiden Stirnseiten zu liegen gebracht werden, die Schrägungswinkel beider Flanken können unterschiedlich gestaltet werden. Des Weiteren könnte die Tiefe der eingebrachten zweiten Verzahnung für linke und rechte Flanke unterschiedlich eingestellt werden, oder sich über den axialen Verlauf der Flanken in unterschiedlicher Weise ändern. Auch kann vorgesehen werden, dass das Profil beider Flanken der zweiten Verzahnung unterschiedlich gestaltet wird.

Je nach Art der Gestaltung der ersten Verzahnung mag diese aufgrund ähnlicher Unsymmetrien wie oben erläutert auch im Einflankenverfahren erzeugt werden, und insbesondere der zweite Bearbeitungseingriff ebenfalls im Einflankenverfahren ausgeführt werden. In einer für diverse Anwendungen ausreichenden und zeitsparenden Variante mag jedoch der zweite Bearbeitunseingriff im Zweiflankenverfahren erfolgen. Insbesondere wenn der zweite Bearbeitungseingriff etwa als ein Schlichtdurchgang (oder mehrere) für die Fertigbearbeitung der ersten Verzahnung durchgeführt wird, ist eine entsprechende Zeitersparnis möglich.

In einer besonders bevorzugten Ausführungsform wird eine Werkstückaufspannung des Werkstücks zwischen dem ersten und dem zweiten Bearbeitungseingriff beibehalten, sowohl der erste als auch der zweite Bearbeitungseingriff finden somit in der gleichen Aufspannung statt, ohne dass diese zwischendurch geändert wird. Auf diese Weise ist weitere Bearbeitungszeit einsparbar.

In einer möglichen Ausgestaltung kann das aufgespannte Werkstück zwischen den beiden Bearbeitungsschritten auch quer zu seiner Drehachse verfahren werden, etwa um in Bearbeitungsposition mit unterschiedlichen werkzeugseitigen Bearbeitungspositionen zu gelangen. In diesem Zusammenhang könnten auch zwei Werkstückspindeln vorgesehen werden, die ihren Platz tauschen können. In einer alternativen und bevorzugten Variante bleibt die Lage und/oder Orientierung der Werkstückdrehachse zwischen dem ersten und dem zweiten Bearbeitungseingriff unverändert, es geht somit keine Bearbeitungszeit durch zusätzliche diese Lage oder Orientierung verändernde Bewegungen zwischen den beiden Bearbeitungseingriffen verloren.

Das erfindungsgemäße Verfahren ist bereits geeignet und vorteilhaft einsetzbar unabhängig von der Art und Weise, wie das Werkstück mit wenigstens einer zu der vorgegebenen Verzahnungsgeometrie passend vorgearbeiteten ersten Verzahnung versehen wird. In einer besonders bevorzugten Verfahrensgestaltung erfolgt jedoch eine Verzahnungsbearbeitung zur Bereitstellung des den ersten Bearbeitungseingriff unterworfenen Werkstücks in der Kinematik des Wälzschälens, und insbesondere mit dem gleichen werkzeugseitigen Eingriffsbereich wie dem des zweiten Bearbeitungseingriffs. Damit kann äußerst zeitsparend die gesamte Verzahnungserzeugung ausgehend von einem Werkstückrohling aufgrund der Synergien der Vorbearbeitung und des zweiten Bearbeitungseingriffs erfolgen. Die oben erläuterten Gestaltungen hinsichtlich der Beibehaltung von Aufspannungen und insbesondere Beibehaltung von Orientierungen und Lagen der Werkstückachse kann analog zur Beziehung zwischen der Vorverzahnungsbearbeitung für die erste Verzahnung und dem ersten Bearbeitungseingriff gelten.

In einer weiter bevorzugten Ausgestaltung findet auch ein Entgraten an einem auslaufenden Ende der ersten Verzahnung statt, d.h. wenigstens an der Stirnseite der ersten Verzahnung, an welcher die insbesondere im Wälzschälen vorgenommene Erzeugungsbewegung in ihrem Vorschub mit werkstückachsparalleler Vorschubkomponente ausläuft. insbesondere wird vorgesehen, dass dieses Entgraten der auslaufenden Stirnseite nach dem zweiten Bearbeitungseingriff erfolgt. Dies könnte beispielsweise mit einem Eingriffsbereich an einer Rückseite eines der herangezogenen Schälräder realisiert werden, oder durch eine bevorzugt koaxial angekoppelte Entgratscheibe.

Das Werkstück mag einen weiteren axialen Übergang im Bereich der ersten Verzahnung aufweisen, etwa in Form einer inneren Kante, in den der Bereitstellungsbearbeitungseingriff zur Erzeugung der ersten Verzahnung oder einer Vorverzahnung der ersten Verzahnung ausläuft, und an dem somit ebenfalls Grate entstehen können. Hierzu ist vorgesehen, einen solchen Grat an der inneren Kante ebenfalls zu entgraten, bevorzugt mit einem werkzeugseitigen Eingriffsbereich, der mit dem werkzeugseitigen Eingriffsbereich des ersten und/oder zweiten Bearbeitungseingriffs bewegungsgekoppelt ist. Hierzu eignet sich eine Entgratscheibe, die eine möglichst geringe axiale Ausdehnung aufweist. Wenn z.B. die innere Kante durch eine Nut in der ersten Verzahnung gebildet ist, kann somit ein Entgraten ohne Beschädigung der Verzahnung an der anderen Seite der Nut erfolgen.

In vorrichtungstechnischer Hinsicht stellt die Erfindung somit als besonders bevorzugte Ausführungsform bereit und offenbart diese als eigenständig schutzwürdig gemäß Anspruch 15 bzw. 16 ein Tandem-Werkzeug wie auch ein Triple-Werkzeug aufweisend zwei koaxiale und axial beabstahdete Schälräder und ein axial nochmals beabstandetes Entgratwerkzeug insbesondere in Form einer koaxial angeordneten Entgratscheibe.

Des Weiteren wird von der Erfindung unter Schutz gestellt ein Steuerprogramm gemäss Anspruch 14 für eine Verzahnungsmaschine, welches, wenn auf der Verzahnungsmaschine ausgeführt, die Verzahnungsmaschine zur Ausführung eines Verfahrens nach einem der vorgenannten Verfahrensaspekte steuert.

In vorrichtungstechnischer Hinsicht stellt die Erfindung eine Verzahnungsmaschine gemäss Anspruch 17 bereit, mit wenigstens einer Werkstückaufspannung, wenigstens einer Werkzeugaufspannung und wenigstens zwei linearen und einer rotatorischen Achse zur Relativpositionierung der Werkzeugaufspannung gegenüber der Werkstückaufspannung, sowie einer Steuereinrichtung zur Steuerung der Maschine, die sich dadurch auszeichnet, dass sie ein derartiges Steuerprogramm aufweist und/oder zur Ausführung eines Verfahrens nach einem der vorgenannten Verfahrensaspekte ausgelegt und gesteuert ist. Eine dritte lineare Achse ist bevorzugt vorgesehen. Bevorzugt sind alle Achsen CNC-gesteuerte Maschinenachsen.

Weitere Merkmale, Einzelheiten und Vorteile der Erfindung ergeben sich aus der nachfolgenden Beschreibung mit Bezug auf die beigefügten Figuren, von denen
Fig. 1 eine schematisch vereinfachte Ansicht einer orthogonal zur Werkstückachse genommene Schnittansicht einer Innenverzahnung ist,
Fig. 2 in einer schematischen Weise Zahnflankenbearbeitungen in einer Schnittansicht A-A aus Fig. 1 erläutert,
Fig. 3 eine Zahnfußbearbeitung anhand von Schnittansichten B-B aus Fig. 1 schematisch erläutert,
Fig. 4 ein Tandem-Werkzeug zeigt,
Fig. 5 ein Triple-Werkzeug zeigt,
Fig. 6 eine Wälzschälmaschine zeigt, und
die Figuren 7 und 8 ein anderes Maschinenkonzept als das von Fig. 6 erläutern.

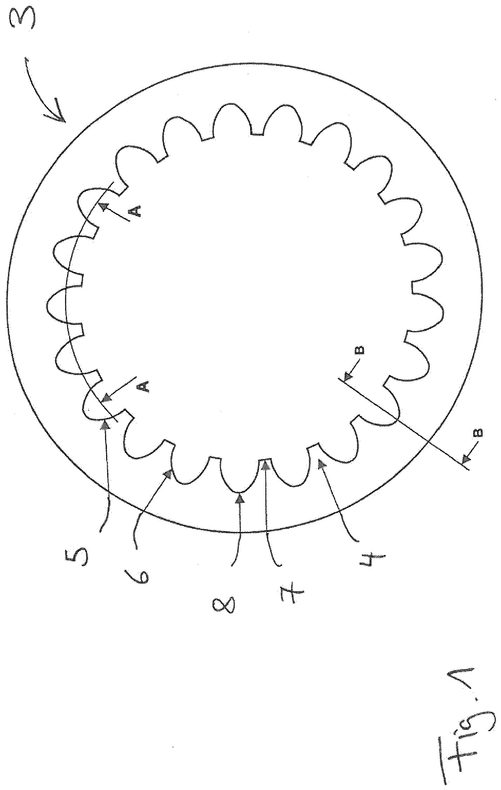

In Fig. 1 ist schematisch ein Querschnitt einer Innenverzahnung 3 dargestellt. Die linken Flanken der Werkstückzähne 4 sind mit 5, die rechten Flanken mit 6 bezeichnet. Des Weiteren ist der Zahnkopf der Innenverzahnung 3 mit 7 und der Zahnfuß der Innenverzahnung mit 8 bezeichnet.

Die Innenverzahnung 3 ist jedoch über ihre axiale Länge nicht einheitlich ausgebildet, sondern weist eine erste Verzahnung 1 und eine in die erste Verzahnung 1 eingebrachte zweite Verzahnung 2 auf, die in Fig. 1 jedoch nicht dargestellt ist.

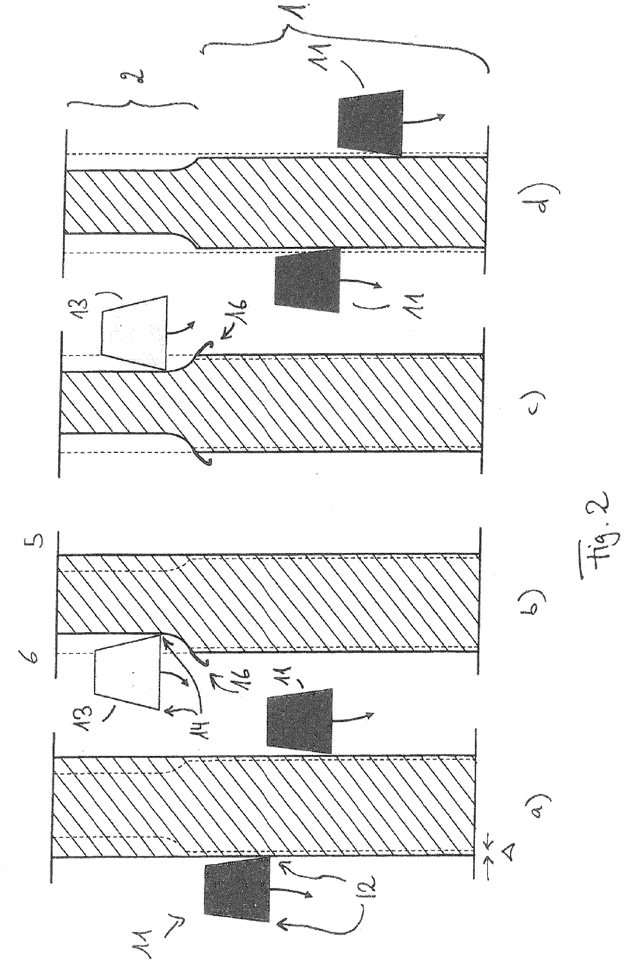

Ein Beispiel für eine Verzahnungsgeometrie der Innenverzahnung 3 an den Zahnflanken ist in Fig. 2d erkennbar, in welcher im axial unteren Bereich die erste Verzahnung 1 dargestellt ist, und im oberen Bereich die darin eingebrachte zweite Verzahnung 2. Mit gestrichelten Linien in Fig. 2d dargestellt ist die Geometrie einer Vorverzahnung, diese entspricht den durchgezogenen Linien in Fig. 2a, in welcher wiederum die zu erzeugende Verzahnungsgeometrie der ersten und zweiten Verzahnung gestrichelt eingezeichnet ist.

In einem Ausführungsbeispiel der Erfindung erfolgt die Erzeugung des Werkstücks bzw. die Einarbeitung der zweiten Verzahnung in die erste Verzahnung wie folgt:
Zunächst wird durch Wälzschälen, hier im Zweiflankenverfahren mit einem ersten Schälrad 11, dessen Schneidkanten mit 12 bezeichnet sind, eine Vorverzahnung für die erste Verzahnung erzeugt, noch mit einem Aufmaß Δ auf linker und rechter Zahnflanke. Dies erfolgt beispielsweise in mehreren Schrupp-Durchgängen mit axialem Vorschub in Fig. 2a von oben nach unten in der Kinematik des Wälzschälens, bei welcher die Drehachse des Schälrads unter einem Achskreuzwinkel zur Drehachse der Innenverzahnung 3 steht (Prinzip des Schraubradgetriebes).

Im nächsten Schritt wird mit einem zweiten Schälrad 13, dessen Schneidkanten mit 14 bezeichnet sind, die zweite Verzahnung 2 eingebracht. Während zuvor (Fig. 2a) bevorzugt im Zweiflankenverfahren gearbeitet wurde, erfolgt dieses Einbringen dagegen bevorzugt im Einflankenverfahren, zuerst an der einen (Fig. 2b) und dann an der anderen (Fig. 2c) Flanke. Dabei entsteht am Auslauf der zweiten Verzahnung ein Grat 16. Dieser graterzeugende Eingriff der Fig. 2b und 2c entspricht dem ersten Bearbeitungseingriff. Das Schälrad 13 für den ersten Bearbeitungseingriff ist hier anders ausgelegt als das Schälrad 11, welches die Vorverzahnung der Verzahnungsgeometrie der ersten Verzahnung erzeugt. Es ist jedoch koaxial zu dem Schälrad 11 Teil eines Mehrfach-Werkzeugs, beispielsweise eines Tandem- oder Triple-Werkzeugs, jedenfalls in diesem Ausführungsbeispiel.

Das Schälrad 13 sowie der im ersten Bearbeitungseingriff eingestellte Achskreuzwinkel werden passend zu der Art der zweiten Verzahnung gewählt. Diese könnte, anders als in Fig. 2 dargestellt, auch konisch sein und insbesondere eine in die erste Verzahnung eingebrachte Hinterlegung darstellen.

In einem weiteren Bearbeitungsschritt wird das (verbleibende) Aufmaß Δ von der ersten Verzahnung abgetragen mit einem Schälrad, das in seiner Auslegung für die herangezogenen Maschinenachssteuerungen für die Erzeugung der ersten Verzahnung mit der vorgegebenen Verzahnungsgeometrie ausgelegt ist. In diesem Ausführungsbeispiel handelt es sich um dasselbe Schälrad 11, welches auch in dem in Fig. 2a dargestellten Schritt für die Erzeugung der bis auf Aufmaß Δ mit der Verzahnungsgeometrie übereinstimmenden Vorverzahnung herangezogen wurde.

Im Bereich der zweiten Verzahnung 2 erfolgt naturgemäß keine Bearbeitung, da in diesem Bereich bei der entsprechenden Zustellposition kein Material mehr vorhanden ist. Aufgrund der spanenden Bearbeitung im Übergang von der zweiten Verzahnung zu der ersten Verzahnung wird jedoch durch den Abtrag des Aufmaßes Δ auch der Grat 16 beseitigt. Dieser zweite Bearbeitungseingriff erfolgt in diesem Beispiel wieder im Zweiflankenverfahren.

Dieses Bearbeitungsverfahren ist zeitoptimiert dahingehend, dass vor dem zweiten Bearbeitungseingriff noch keine Schlichtdurchgänge in der Herstellung der Vorverzahnung vorgenommen werden müssen; ein oder mehrere letzte abtragende Durchgänge im Schlichten können im zweiten Bearbeitungseingriff in einem zudem axial kürzeren Bereich durchgeführt werden, bei dem gleichzeitig eine Gratbeseitigung erfolgt. Es ergeben sich insgesamt gesehen entsprechend kurze Bearbeitungszeiten für die Eingriffe selbst.

Wird zudem wie in einem bevorzugten Ausführungsbeispiel die Verzahnungsvorbearbeitung (Fig. 2a), der erste Bearbeitungseingriff (Fig. 2b, c) und der zweite Bearbeitungseingriff (Fig. 2d) in der gleichen Aufspannung der Innenverzahnung 3 und insbesondere mit unterschiedlichen Eingriffsbereichen eines Mehrfachwerkzeugs durchgeführt, ergibt sich bei vergleichsweise sehr geringer Gesamtbearbeitungszeit eine zufriedenstellende Verzahnungsqualität der Innenverzahnung 3.

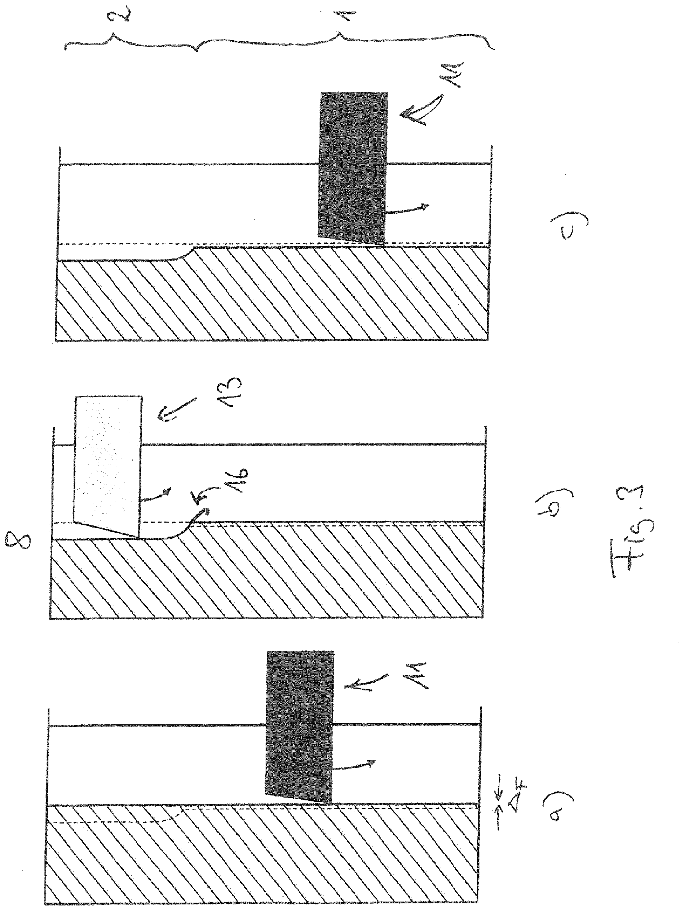

In Fig. 3 ist noch dargestellt, wie der Fuß 8 der Innenverzahnung 3 gemäß einer ähnlichen Verfahrensweise bearbeitet werden kann wie in Fig. 2 dargestellt, nämlich wenn sich der Unterschied zwischen der ersten Verzahnung und der zweiten Verzahnung auch im Fuß 8 der Innenverzahnung äußert. Es kann bei der Vorbearbeitung für die erste Verzahnung 1 ein Aufmaß Δ_{F} im Fußbereich verbleiben, der im Bereich der ersten Verzahnung erst im zweiten Bearbeitungseingriff (Fig. 3c) abgetragen wird, nachdem im ersten Bearbeitungseingriff (Fig. 3b) der Fuß der zweiten Verzahnung 2 bearbeitet ist. Wiederum wird dabei im zweiten Bearbeitungseingriff der im ersten Bearbeitungseingriff entstehende Grat im Fußbereich beseitigt. Es sind jedoch auch Arten der eingebrachten zweiten Verzahnung denkbar, bei denen etwa die Funktionsflächen der zweiten Verzahnung nur auf den Flanken wirken müssen, und die Innenverzahnung 3 im Fußbereich gleichmäßig ist. Auch in diesem Fall könnte man im Bereich von Fuß 8 noch ein Aufmaß Δ_{F} belassen, das im zweiten Bearbeitungseingriff abgetragen wird.

Die in den Figuren 2a und 3a beschriebenen Abträge erfolgen hier im Rahmen eines gleichen (vorbereitenden) Schrittes, wie auch Figuren 2d und 3c dem gleichen Bearbeitungseingriff entsprechen. Die Darstellung von Fig. 3b (Fußbearbeitung der zweiten Verzahnung 2) ist eine vereinfachte Darstellung der Gegebenheit, dass bei der Erzeugung der zweiten Verzahnung im Einflankenverfahren sich die Fußbearbeitung aus der jeweilig im Einflankenverfahren durchgeführten, den Fußbereich miteinschließenden Bearbeitungen entsprechend den Figuren 2b und 2c erzeugt werden könnte. Grundsätzlich könnte jedoch auch daran gedacht werden, die zweite Verzahnung im Zweiflankenverfahren zu bearbeiten, allerdings erlaubt die Einflankenbearbeitung mit den Möglichkeiten separater Tangentialbewegungen und/oder Zusatzdrehungen flexibler zu arbeiten und u.a. auch auf tiefere Einschnitte im Zahnfuß zu verzichten. Der erste Bearbeitungseingriff kann somit in einer Ausführung auch auf die Zahnflanken beschränkt werden. Umgekehrt könnte sich die zweite Verzahnung in einem anderen Ausführungsbeispiel auch nur im Fußbereich erstrecken.

Zur Vereinfachung der Darstellungen in den Figuren 2 und 3 sind die noch nicht bearbeiteten Bereiche des jeweiligen Schnitts, also derjenigen unterhalb der Schneidkanten ebenfalls dargestellt als wäre eine Materialabnahme bereits erfolgt, obwohl diese in diesen Bereichen erst nach weiterem Vorschub erfolgt.

In einer nicht in den Figuren dargestellten Variante könnte bereits vor Einbringen der zweiten Verzahnung 2 eine Fertigbearbeitung der ersten Verzahnung 1 erzeugt werden, ohne ein Aufmaß Δ zu belassen. Der im ersten Bearbeitungseingriff für die Einarbeitung der zweiten Verzahnung 2 in der ersten Verzahnung 1 erzeugte Grat wäre dann durch einen Leerhub des ersten Schälrads 11 im Bereich des Übergangs zwischen erster und zweiter Verzahnung entfernbar (zweiter Bearbeitungseingriff rein entgratend).

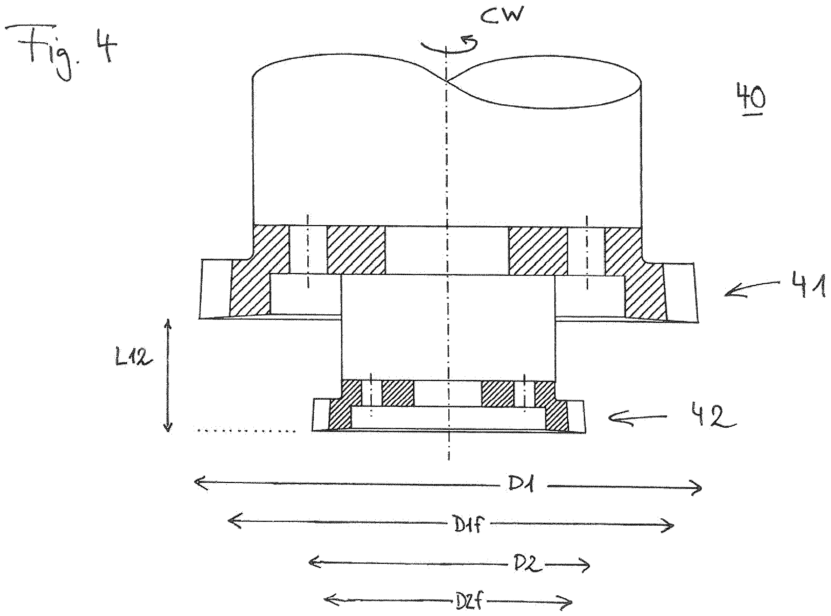

In Fig. 4 ist ein Tandem-Werkzeug 40 dargestellt, welches ein erstes Schälrad 41 und ein zweites Schälrad 42 aufweist. Die Schälräder 41 und 42 sind fest miteinander verbunden und haben dieselbe Drehachse CW. Mit dem ersten Schälrad 41 kann die erste Verzahnung mit der vorgegebenen Verzahnungsgeometrie erzeugt werden, beispielsweise eine Laufradverzahnung. Mit dem zweiten Schälrad 42 kann die zweite Verzahnung in die erste Verzahnung eingebracht werden. In der jeweiligen Bearbeitung steht die Werkzeugdrehachse CW unter einem Achskreuzwinkel zu der Werkstückdrehachse. Zur Vermeidung von Kollisionen ist für die Bearbeitung von Außenverzahnungen der Außendurchmesser D2 des Schälrads 42 geringer als der Fußdurchmesser D1f des ersten Schälrads 41. Für die Bearbeitung von Innenverzahnungen ist bevorzugt vorgesehen, dass D2 nicht größer ist als 0,9 D1f. Bevorzugt ist D2 nicht größer als 0,8 D1f, insbesondere nicht größer als 0,6 D1f. Es sind sogar Werte bis hin zu 0,4 D1f oder 0,3 D1f für D2 denkbar, auch wenn sich bei entsprechend kleinen Schälrädern flache Spankurven ausbilden. Zur Vermeidung selbiger kann insbesondere für Außenverzahnungen auch vorgesehen sein, dass D2 wenigstens 40% von D1f, insbesondere wenigstens 60% von D1f, sogar 80% oder mehr von D1f ausmacht. In einer weiteren bevorzugten Variante sind die Module des ersten Schälrads 41 und des zweiten Schälrads 42 im Wesentlichen gleich, und unterscheiden sich bevorzugt um nicht mehr als 20%, weiter bevorzugt nicht mehr als 10%, insbesondere um nicht mehr als 5%.

Der axiale Abstand L12 zwischen den Schnittkanten des zweiten Schälrads 42 und des ersten Schälrads 41 ist ausreichend groß gewählt, um für den für den ersten Bearbeitungseingriff eingestellten Achskreuzwinkel eine Kollisionsgefahr durch das erste Schälrad 41 zu vermeiden. Bevorzugt ist jedoch dieser Abstand L12 nicht größer als 2,4 D2f, insbesondere nicht größer als 2,0 D2f, insbesondere nicht größer als 1,6 D2f. Dies verringert die Gefahr auftretender Schwingungen bei dem ersten Bearbeitungseingriff, dem Einbringen der zweiten Verzahnung in die erste Verzahnung des Werkstücks.

Wie oben bereits erläutert, könnten zur Ausführung jedoch auch getrennte Schälräder 41, 42 herangezogen werden, beispielsweise auf zwei vorgesehenen Werkzeugspindein oder im Werkzeugwechsel auf einer Werkzeugspindel.

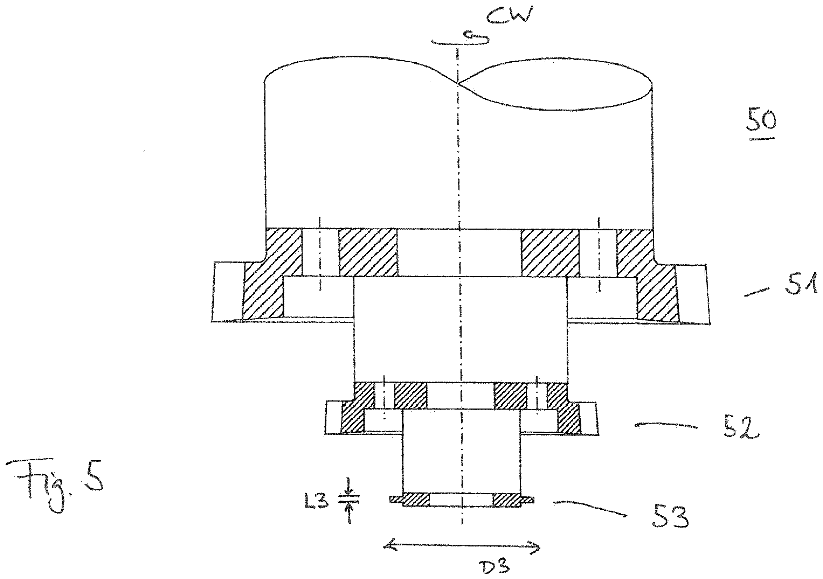

In Fig. 5 ist ein Triple-Werkzeug 50 dargestellt, welches ein erstes Schälrad 51 und ein zweites Schälrad 52 aufweist, deren Anordnung wie die der Schälräder 40 und 41 aus Fig. 4 sein kann. Im Unterschied zu dem Tandem-Werkzeug aus Fig. 4 ist jedoch axial von dem zweiten Schälrad 52 noch eine Entgratscheibe 53 angeordnet.

Hinsichtlich des Durchmessers D3 der Entgratscheibe 53 gelten bevorzugt zwischen D3 und D2f die gleichen Beziehungen wie für die oben anhand von Fig. 4 erläuterten Beziehungen zwischen D2 und D1f.

Die axiale Abmessung L3 der Entgratscheibe 53 ist dabei so gering gewählt, dass die Entgratscheibe 53 in beispielsweise eine am Werkstück vorgesehene Nut einführbar ist und Grate von Verzahnungskanten an der Nut entgraten kann. Dazu ist der axiale Abstand zwischen der Schnittkante des zweiten Schälrads 52 und der Entgrabscheibe 53 ausreichend groß gewählt, nämlich größer als der Abstand von dem bearbeitungszugewandten Ende der Verzahnung zu der Nut bzw. dem vorgesehenen Arbeitsbereich der Entgratscheibe 53. Gegebenenfalls kann der Abstand auch größer sein als die Radbreite der bearbeiteten Verzahnung, dann könnte mit der Entgratscheibe 53 auch das bewegungsauslaufende Ende der ersten Verzahnung entgratet werden.

Die Ausdrücke Tandem-Werkzeug oder Triple-Werkzeug bedeuten ein Kombinationswerkzeug mit wenigstens den zwei Schälrädern bzw. noch zusätzlich der Entgratscheibe, aber auch zusätzliche, insbesondere weitere koaxiale Werkzeuge, können Bestandteil des Kombiwerkzeugs sein. Denkbar sind jedoch auch reine Tandem- oder reine Triple-Werkzeuge mit genau den 2. bzw. 3. Werkzeugen.

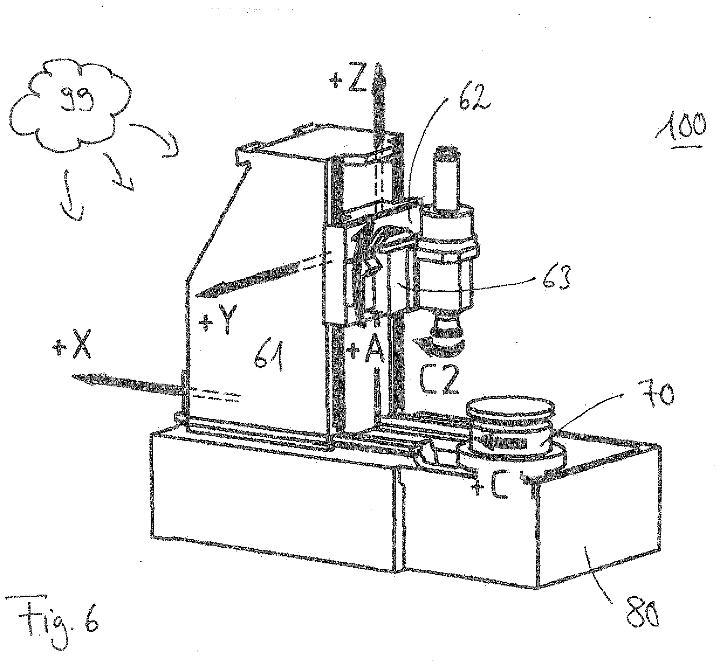

Das Tandem-Werkzeug aus Fig. 4 oder das Triple-Werkzeug aus Fig. 5 könnte beispielsweise in die Werkzeugaufspannung einer in Fig. 6 dargestellten Wälzschälmaschine 100 eingespannt werden. Die Wälzschälmaschine 100 ist über eine schematisch mit 99 dargestellte Steuerung gesteuert, ein Verfahren nach einem der oben erläuterten Verfahrensaspekte auszuführen. Dazu weist die Wälzschälmaschine 100 werkstückseitig eine auf einem Maschinenbett 80 angeordnete Werkstückspindel 70 auf, die hier als stehende Spindel gestaltet ist. Werkzeugseitig ist ein in radialer Zustellrichtung X gegenüber dem Maschinenbett 80 beweglicher Radialschlitten 61 vorgesehen, an dem ein diesem gegenüber in Axialrichtung Z beweglich gelagerter Axialschlitten 62 schwenkbar einen Tangentialschlitten 63 trägt, an welchem der Werkzeugkopf mit Werkzeugspindelachse C2 angeordnet ist. Die Schwenkachse A ist hierbei parallel zur Radialachse X und erlaubt ein Verschwenken der Werkzeugspindelachse C2 und damit der Werkzeugdrehachse CW in der Y-Z-Ebene, zur Einstellung des Achskreuzwinkels Σ zwischen Werkzeugdrehachse und Werkstückdrehachse eines auf der Werkstückspindel 70 aufgespannten Werkstückes, welches ein innen- oder außenverzahntes Werkstück sein kann (oder auch ein Werkstück mit sowohl einer Innen- als auch einer Außenverzahnung).

Bei der in Fig. 6 dargestellten Maschine handelt es sich um eine CNC-gesteuerte Maschine mit jeweils Einzelantrieben für die dargestellten Bewegungsachsen. Es sind jedoch auch einfachere Maschinenvarianten denkbar, auf denen die Verfahren ausführbar sind, beispielsweise könnte auf den Tangentialschlitten 63 verzichtet werden und der Werkzeugkopf gegenüber dem Axialschlitten 62 ohne tangentiale Verschiebbarkeit schwenkbar angeordnet sein. Auch müsste es sich bei der Schwenkachse A nicht um eine motorisch eingestellte Maschinenachse handeln, solange unterschiedliche Achskreuzwinkel festlegbar sind.

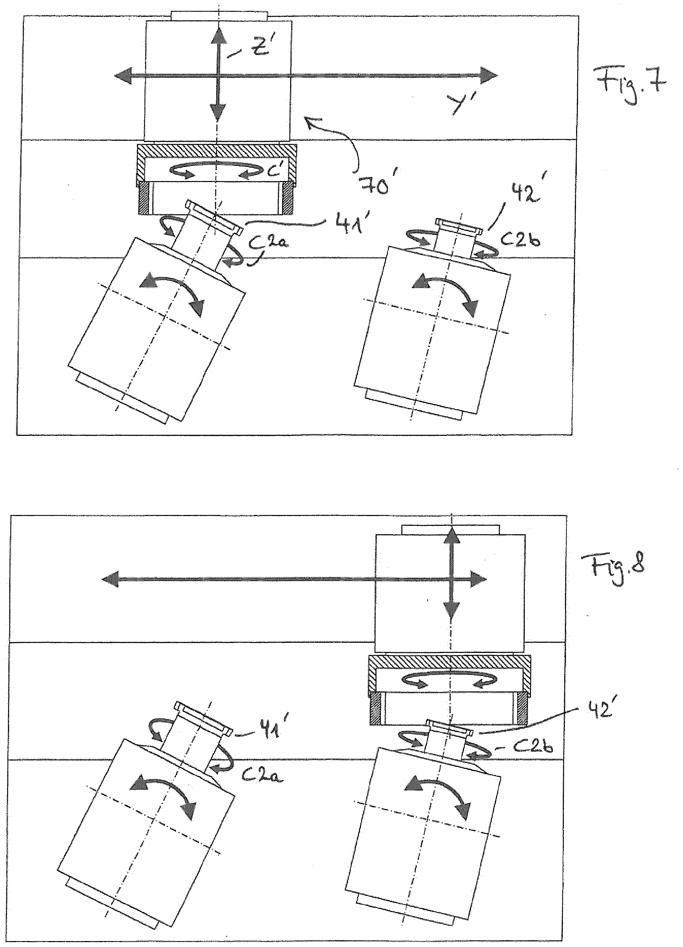

Als weiteres Beispiel einer anderen Gestaltung einer Verzahnungsmaschine kann etwa das Konzept einer Pick-up-Maschine mit einer hängenden Werkstückspindel 70' herangezogen werden, welche beispielsweise axial verschieblich gelagert ist (Z') und in einer tangentialen Richtung zwischen einer ersten in Fig. 7 gezeigten Bearbeitungsposition für eine Erzeugung der ersten Verzahnung bzw. den zweiten Bearbeitungseingriff und einer zweiten Bearbeitungsposition (Fig. 8) für ein Einbringen der zweiten Verzahnung verschiebbar ist. Bei dieser Variante trägt eine erste Werkzeugspindel mit Werkzeugspindelachse C2a ein Schälrad 41' zum Erzeugen der ersten Verzahnung (Vorverzahnung und zweiter Bearbeitungseingriff), und eine zweite Werkzeugspindel mit Drehachse C2b trägt ein zweites Schälrad 42' für die Einarbeitung der zweiten Verzahnung (erster Bearbeitungseingriff).

## Patentansprüche

1. Verfahren zum Erzeugen eines Werkstücks (3) mit einer in eine eine vorgegebene Verzahnungsgeometrie aufweisende erste Verzahnung (1) eingearbeiteten zweiten Verzahnung (2),
**dadurch gekennzeichnet, dass**
ein die zweite Verzahnung in der Kinematik des Wälzschälens schneidend erzeugender erster Bearbeitungseingriff an dem Werkstück vorgenommen wird, welches insbesondere noch ein Aufmaß (Δ) gegenüber der vorgegebenen Verzahnungsgeometrie aufweist, insbesondere an einem Übergang von der ersten zur zweiten Verzahnung, und
dass danach ein zu der vorgegebenen Verzahnungsgeometrie passender zweiter Bearbeitungseingriff in der Kinematik des Wälzschälens an dem Übergang ausgeführt wird und dabei insbesondere ein verbleibendes Aufmaß abgetragen wird.

2. Verfahren nach Anspruch 1, bei dem der erste Bearbeitungseingriff in den Übergang mit einer zu dem Übergang hin gerichteten axialen Schnittrichtungskomponente ausläuft und der zweite Bearbeitungseingriff eine zu dieser Schnittrichtungskomponente gleichgerichtete axiale Schnittrichtungskomponente aufweist.

3. Verfahren nach Anspruch 1 oder 2, bei dem das Aufmaß wenigstens 6 µm, bevorzugt wenigstens 20 µm, insbesondere wenigstens 40 µm und/oder höchstens 1,6 mm, bevorzugt höchstens 1,0 mm, insbesondere höchstens 0,4 mm beträgt.

4. Verfahren nach einem der vorhergehenden Ansprüche, bei dem sich das vor Ausführung des ersten Bearbeitungseingriffs vorhandene Aufmaß über die volle Verzahnungsbreite der ersten Verzahnung (1) erstreckt und im zweiten Bearbeitungseingriff abgetragen wird.

5. Verfahren nach einem der vorhergehenden Ansprüche, bei dem der erste wie auch der zweite Bearbeitungseingriff über dieselbe drehend angetriebene Werkzeugachse (C2, CW) erfolgt.

6. Verfahren nach einem der vorhergehenden Ansprüche, bei dem ein werkzeugseitiger Eingriffsbereich des ersten Bearbeitungseingriffs sich von dem werkzeugseitigen Eingriffsbereich des zweiten Bearbeitungseingriffs unterscheidet.

7. Verfahren nach einem der vorhergehenden Ansprüche, bei dem der erste Bearbeitungseingriff im Einflankenverfahren erfolgt.

8. Verfahren nach einem der vorhergehenden Ansprüche, bei dem der zweite Bearbeitungseingriff im Zweiflankenverfahren erfolgt.

9. Verfahren nach einem der vorhergehenden Ansprüche, bei dem eine Werkstückaufspannung des Werkstücks zwischen dem ersten und dem zweiten Bearbeitungseingriff beibehalten wird.

10. Verfahren nach einem der vorhergehenden Ansprüche, bei dem die Lage und/oder Orientierung der Werkstückdrehachse (C, C') zwischen dem ersten und dem zweiten Bearbeitungseingriff unverändert bleibt.

11. Verfahren nach einem der vorhergehenden Ansprüche, bei dem eine Verzahnungsbearbeitung zur Bereitstellung des dem ersten Bearbeitungseingriff unterworfenen Werkstücks in der Kinematik des Wälzschälens vorgenommen wird, insbesondere mit dem gleichen werkzeugseitigen Eingriffsbereich wie dem des zweiten Bearbeitungseingriffs.

12. Verfahren nach einem der vorhergehenden Ansprüche, bei dem ein Entgraten an einem auslaufenden Ende der ersten Verzahnung insbesondere nach dem zweiten Bearbeitungseingriff erfolgt.

13. Verfahren nach Anspruch 11 oder 12, bei dem das Werkstück im Bereich der ersten Verzahnung eine innere, für den Bereitstellungsbearbeitungseingriff auslaufende Kante aufweist, die mit einem mit dem werkzeugseitigen Eingriffsbereich des ersten und/oder zweiten Bearbeitungseingriffs bewegungsgekoppelten Eingriffsbereich entgratet wird.

14. Steuerprogramm für eine Verzahnungsmaschine, welches, wenn auf der Verzahnungsmaschine ausgeführt, die Verzahnungsmaschine zur Ausführung eines Verfahrens nach einem der vorhergehenden Ansprüche steuert.

15. Tandem-Werkzeug (40) zur Ausführung eines Verfahrens nach einem der Ansprüche 1 bis 13 mit einem ersten Schälrad (41) zum Wälzschälen einer ersten Verzahnung (1) und zur Ausführung des zweiten Bearbeitungseingriffs an dem Übergang und einem koaxial fest mit dem ersten Schälrad (41) verbundenen und sich von diesem unterscheidenden zweiten Schälrad (42) zum Einbringen einer zweiten Verzahnung (2) in die erste Verzahnung (1) im ersten Bearbeitungseingriff, wobei der Außendurchmesser (D2) des zweiten Schälrads (42) geringer ist als der Fußdurchmesser (D1F) des ersten Schälrads (41).

16. Triple-Werkzeug (50), aufweisend ein Tandem-Werkzeug nach Anspruch 15 und eine koaxial fest mit diesem verbundene Entgratscheibe (53).

17. Verzahnungsmaschine (100) mit wenigstens einer Werkstückaufspannung, wenigstens einer Werkzeugaufspannung und wenigstens zwei linearen (X, Z) und einer rotatorischen (A) Achse zur Relativpositionierung der Werkzeugaufspannung gegenüber der Werkstückaufspannung, sowie einer Steuereinrichtung (99) zur Steuerung der Maschine, **dadurch gekennzeichnet, dass** die Maschine ein Steuerprogramm nach Anspruch 14 aufweist, zur Ausführung eines Verfahrens nach einem der Ansprüche 1 bis 13 ausgelegt und dazu gesteuert ist und/oder ein Werkzeug nach einem der Ansprüche 15 oder 16 aufweist.

## Claims

1. A method for generating a workpiece (3) having a second toothing (2) incorporated into a first toothing (1) having a predefined toothing geometry,
**characterised in that** a first machining operation is carried out on the workpiece to generate the second toothing by cutting in the kinematics of skiving, said workpiece in particular still having an oversize (Δ) relative to the predefined toothing geometry, in particular at a transition from the first to the second toothing, and **in that** a second machining operation which matches the predefined toothing geometry is then carried out at the transition in the kinematics of skiving, thereby in particular removing any remaining oversize.

2. The method in accordance with claim 1, wherein the first machining operation ceases at the transition such that it has an axial cutting direction component directed towards the transition and the second machining operation has an axial cutting direction component aligned to said cutting direction component.

3. The method in accordance with claim 1 or 2, wherein the oversize is at least 6 µm, preferably 20 µm, in particular at least 40 µm and/or no more than 1.6 mm, preferably no more than 1.0 mm, in particular no more than 0.4 mm.

4. The method in accordance with one of the preceding claims, wherein the oversize present before the first machining operation is carried out extends over the full toothing width of the first toothing (1) and is removed in the second machining operation.

5. The method in accordance with one of the preceding claims, wherein the first and second machining operations are carried out using the same rotationally driven tool axis (C2, CW).

6. The method in accordance with one of the preceding claims, wherein a tool-side operating region of the first machining operation differs from the tool-side operating region of the second machining operation.

7. The method in accordance with one of the preceding claims, wherein the first machining operation is carried out in a one-flank process.

8. The method in accordance with one of the preceding claims, wherein the second machining operation is carried out in a two-flank process.

9. The method in accordance with one of the preceding claims, wherein a clamping of the workpiece is maintained between the first and second machining operation.

10. The method in accordance with one of the preceding claims, wherein the position and/or orientation of the workpiece axis of rotation (C, C') remains unchanged between the first and second machining operation.

11. The method in accordance with one of the preceding claims, wherein a toothing machining process for providing the workpiece subjected to the first machining operation is carried out in the kinematics of the skiving, in particular using the same tool-side operating region as that of the second machining operation.

12. The method in accordance with one of preceding claims, wherein deburring is carried out on an outgoing end of the first toothing, in particular after the second machining operation.

13. The method in accordance with claim 11 or 12, wherein the workpiece, in the region of the first toothing, has an inner edge which ceases for the provision machining operation and which is deburred by means of an operating region kinetically coupled to the tool-side operating region of the first and/or second machining operation.

14. A control program for a toothing machine, which program, when executed on the toothing machine, controls the toothing machine in order to carry out a method in accordance with one of the preceding claims.

15. A tandem tool (40) for carrying out a method in accordance with one of claims 1 to 13 comprising a first skiving wheel (41) for skiving a first toothing (1) and for carrying out the second machining operation at the transition, and comprising a second skiving wheel (42) for introducing a second toothing (2) into the first toothing (1) during the first machining operation, which second skiving wheel (42) is coaxially rigidly connected to the first skiving wheel (41) and differs therefrom, wherein the outer diameter (D2) of the second skiving wheel (42) is smaller than the base diameter (D1F) of the first skiving wheel (41).

16. A triple tool (50), comprising a tandem tool in accordance with claim 15 and a deburring disc (53) coaxially rigidly connected thereto.

17. A toothing machine (100) comprising at least one workpiece clamping means, at least one tool clamping means and at least two linear axes (X, Z) and one rotational axis (A) for relative positioning of the tool clamping means relative to the workpiece clamping means, and comprising a control device (99) for controlling the machine, **characterised in that** the machine comprises a control program in accordance with 14, is designed and controlled so as to carry out a method in accordance with one of claims 1 to 13 and/or comprises a tool in accordance with one of claims 15 and 16.

## Revendications

1. Procédé de production d'une pièce d'usinage (3) présentant une deuxième denture (2) incorporée dans une première denture (1) dotée d'une géométrie prédéfinie,
**caractérisé en ce qu'**on entreprend un premier contact d'usinage sur la pièce d'usinage destiné à produire par taillage la deuxième denture dans la cinématique de l'opération de taillage par génération, laquelle pièce présente notamment encore une surépaisseur (Δ) par rapport à la géométrie de denture prédéfinie, notamment au niveau d'une zone de transition entre la première et la deuxième denture, et **en ce qu'**on réalise ensuite, dans la cinématique de l'opération de taillage par génération, au niveau de la zone de transition, un deuxième contact d'usinage adapté à la géométrie de denture prédéfinie, lors duquel une surépaisseur restante est notamment éliminée.

2. Procédé selon la revendication 1, dans lequel le premier contact d'usinage se termine dans la zone de transition avec une composante directionnelle de coupe axiale dirigée vers ladite zone de transition et le deuxième contact d'usinage présente une composante directionnelle de coupe axiale équidirectionnelle à ladite composante directionnelle de coupe.

3. Procédé selon la revendication 1 ou 2, dans lequel la surépaisseur fait au moins 6 µm, de préférence au moins 20 µm, notamment au moins 40 µm et/ou au plus 1,6 mm, de préférence au plus 1,0 mm, notamment au plus 0,4 mm.

4. Procédé selon l'une des revendications précédentes, dans lequel la surépaisseur présente avant la réalisation du premier contact d'usinage s'étend sur toute la largeur de la première denture (1) et est éliminée lors du deuxième contact d'usinage.

5. Procédé selon l'une des revendications précédentes, dans lequel le premier ainsi que le deuxième contact d'usinage se produisent sur le même axe d'outil (C2, CW) entraîné en rotation.

6. Procédé selon l'une des revendications précédentes, dans lequel une zone de contact côté outil du premier contact d'usinage est différente de la zone de contact côté outil du deuxième contact d'usinage.

7. Procédé selon l'une des revendications précédentes, dans lequel le premier contact d'usinage s'effectue dans un procédé d'usinage sur un flanc.

8. Procédé selon l'une des revendications précédentes, dans lequel le deuxième contact d'usinage s'effectue dans un procédé d'usinage sur deux flancs.

9. Procédé selon l'une des revendications précédentes, dans lequel un serrage de la pièce d'usinage est maintenu entre le premier et le deuxième contact d'usinage.

10. Procédé selon l'une des revendications précédentes, dans lequel la position et/ou l'orientation de l'axe de rotation (C, C') de la pièce d'usinage demeure inchangé entre le premier et le deuxième contact d'usinage.

11. Procédé selon l'une des revendications précédentes, dans lequel on entreprend un usinage de denture, destiné à préparer la pièce d'usinage soumise au premier contact d'usinage, dans la cinématique de l'opération de taillage par génération, notamment avec la même zone de contact côté outil que le deuxième contact d'usinage.

12. Procédé selon l'une des revendications précédentes, dans lequel il se produit un ébavurage sur une extrémité terminale de la première denture, notamment après le deuxième contact d'usinage.

13. Procédé selon la revendication 11 ou 12, dans lequel la pièce d'usinage présente, dans la zone de la première denture, une arête intérieure terminale destinée au contact d'usinage de préparation et ébavurée par une zone de contact couplée en mouvement à la zone de contact côté outil du premier et/ou du deuxième contact d'usinage.

14. Programme de commande destiné à une machine à tailler les dentures qui, lorsqu'il est exécuté sur la machine à tailler les dentures, commande ladite machine afin de réaliser un procédé selon l'une des revendications précédentes.

15. Outil en tandem (40) permettant de réaliser un procédé selon l'une des revendications 1 à 13, comportant une première roue de taillage (41) destinée à l'opération de taillage par génération d'une première denture (1) et destinée à la réalisation du deuxième contact d'usinage au niveau de la zone de transition, et une deuxième roue de taillage (42) raccordée de manière coaxialement fixe à la première roue de taillage (41) et se différenciant de cette dernière pour rapporter une deuxième denture (2) dans la première denture (1) lors du premier contact d'usinage, le diamètre extérieur (D2) de la deuxième roue de taillage (42) étant inférieur au diamètre de pied (D1F) de la première roue de taillage (41).

16. Outil triple (50) présentant un outil en tandem selon la revendication 15 et un disque d'ébavurage (53) raccordé de manière coaxialement fixe à celui-ci.

17. Machine à tailler les dentures (100) comportant au moins un dispositif de serrage de pièce d'usinage, au moins un dispositif de serrage d'outil et au moins deux axes linéaires (X, Z) et un axe de rotation (A) pour le positionnement relatif du dispositif de serrage d'outil par rapport au dispositif de serrage de pièce d'usinage, ainsi qu'un dispositif de commande (99) destiné à commander ladite machine, **caractérisée en ce qu'**elle présente un programme de commande selon la revendication 14, **en ce qu'**elle est conçue et commandée pour réaliser un procédé selon l'une des revendications 1 à 13 et/ou **en ce qu'**elle présente un outil selon l'une des revendications 15 et 16.
